Europäisches Patentamt

(19) European Patent Office

Office européen des brevets

(11) Numéro de publication: **0 1 1 7 8 1 7**
**B1**

(12) **FASCICULE DE BREVET EUROPEEN**

(45) Date de publication du fascicule du brevet:
**12.04.89**

(21) Numéro de dépôt: **84400374.9**

(22) Date de dépôt: **24.02.84**

(51) Int. Cl.⁴: **A 01 F 15/00**

(54) **Dispositif de commande automatique de liage dans une presse à fourrage.**

(30) Priorité: **28.02.83 FR 8303276**

(43) Date de publication de la demande:
**05.09.84 Bulletin 84/36**

(45) Mention de la délivrance du brevet:
**12.04.89 Bulletin 89/15**

(84) Etats contractants désignés:
**DE GB IT NL**

(56) Documents cités:
**EP-A- 0 046 427**
**EP-A- 0 060 366**
**FR-A- 2 393 359**
**FR-A- 2 397 144**
**FR-A- 2 424 579**
**US-A- 3 913 473**

**LE NOUVEL AUTOMATISME, vol. 26, no. 26,
novembre/décembre 1981, pages 58-71, Paris, FR M.
FERRETTI: "Panorama de 150 manipulateurs et robots
Industriels"**
**LE NOUVEL AUTOMATISME, mars 1982, pages 54-63,
Paris, FR P. BAYLOU et al.: "La robotique agricole"**

(73) Titulaire: **REGIE NATIONALE DES USINES RENAULT,
Boîte postale 103 8-10 avenue Emile Zola,
F-92109 Boulogne-Billancourt (FR)**

(72) Inventeur: **Drutel, Yves, 30, Allée de la Forêt,
F-92360 Meudon la Forêt (FR)**
Inventeur: **Joyez, Gérard, 11, Rue Boisset, F-77166 Grisy
Suisnes (FR)**

(74) Mandataire: **Casalonga, Axel et al, BUREAU D.A.
CASALONGA OFFICE JOSSE & PETIT Morassistrasse 8,
D-8000 München 5 (DE)**

## Description

La présente invention est relative à l'automatisation de certaines étapes particulières du fonctionnement d'une presse à fourrage capable de former des balles cylindriques de grand diamètre.

Les presses de ce type qui sont destinées à être attelées à un tracteur et reliées à la prise de force de ce dernier afin d'assurer le mouvement des différents organes de la presse, comprennent une chambre de formation de balle à l'intérieur de laquelle le fourrage est alimenté à partir d'un ramasseur prélevant l'andain sur le sol. L'andain ainsi introduit dans la chambre de formation de la balle cylindrique, est progressivement enroulé sur lui-même, la balle en formation étant soumise à un mouvement de rotation autour de son axe par serrage à l'intérieur d'une boucle formée dans une pluralité de courroies passant sur plusieurs rouleaux tendeurs dont certains possèdent des axes qui peuvent se déplacer au fur et à mesure de l'augmentation du diamètre de la balle en formation. Des ressorts agissent sur certains de ces rouleaux tendeurs de façon à exercer sur les courroies qui entourent la balle une pression suffisante pour la réalisation de balles de densité convenable.

Lorsque la balle de fourrage a atteint le diamètre désiré, on procède à son liage au moyen d'un lien constitué généralement par une ficelle qui peut être introduite par l'intermédiaire d'un dispositif de guidage devant l'orifice d'entrée dans la presse du fourrage. L'extrémité libre du lien se trouve alors saisie par la nappe de fourrage et le lien est enroulé autour de la balle sous l'effet de la rotation de cette dernière entre les courroies qui la maintiennent. La presse comprend sur sa paroi arrière une porte dont l'ouverture permet l'éjection de la balle après l'opération de liage. Pour répartir convenablement les enroulements du lien sur la longueur axiale de la balle cylindrique, le dispositif de guidage du lien est amené à se déplacer dans un mouvement de va-et-vient sur toute la largeur de la presse.

Le déplacement de ce dispositif de guidage peut être effectué manuellement par l'opérateur par traction sur un câble et retour en position du dispositif de guidage sous l'action d'un ressort de rappel.

On a également décrit des dispositifs permettant d'assurer le mouvement de va-et-vient de manière semi-automatique par exemple dans la demande de brevet européen n° 0 046 427 et dans la demande de brevet français 2 397 144.

Jusqu'à présent, les différentes opérations qui font suite à la formation de la balle à l'intérieur de la presse n'ont pas été l'objet d'une automatisation poussée et ont donc nécessité chaque fois un certain nombre d'interventions manuelles de l'opérateur. Il en résulte en particulier des irrégularités dans le liage des balles obtenues et une augmentation notable des temps d'arrêt de fonctionnement après la formation de chaque balle pour permettre les opérations de liage et d'éjection de la balle liée.

La demande de brevet européen EP-A-115 995 qui n'a été publiée qu'après la date de dépôt de la présente demande est considérée comme comprise dans l'état de la technique selon les dispositions de l'article 54 (3) de la Convention sur le brevet européen et ne doit donc pas être prise en considération pour l'appréciation de l'activité inventive. Cette demande de brevet décrit de manière générale un procédé et un dispositif de commande d'une machine de ramassage de foin en balles à ficelage automatique des balles, prévoyant une première phase d'apprentissage au cours de laquelle le dispositif de guidage du lien est manœuvré manuellement, la durée de chaque étape et le sens du déplacement étant mémorisés sous la forme d'un programme de ficelage. Le programme est ensuite reproduit automatiquement au cours d'une deuxième phase, de façon à assurer le ficelage des balles ultérieures.

Cette description ne précise pas l'existence de moyens de détection de la vitesse d'entraînement de la balle ni du diamètre de la balle. De plus seule la phase de liage des balles est automatique.

La présente invention a pour objet l'automatisation complète des deux opérations finales de liage et d'éjection de la balle permettant d'assurer une grande régularité dans le liage de l'ensemble des balles formées, le liage pouvant se faire exactement selon les désirs de l'utilisateur. L'invention a par ailleurs pour objet d'accélérer notablement la réalisation des deux étapes finales que constituent le liage et l'éjection de la balle.

Selon l'invention, le dispositif de commande automatique de liage de balles cylindriques de grand diamètre est adapté sur une presse à fourrage comportant un bras de guidage du lien dont l'extrémité peut être animée d'un mouvement de va-et-vient sur toute la largeur de la balle en formation sous l'action d'un moteur électrique. La presse comporte en outre des moyens pour entraîner la balle en rotation. Le dispositif de commande comprend un premier capteur de la vitesse d'entraînement desdits moyens, un microprocesseur recevant les signaux d'entrée émis par le premier capteur précité et par un deuxième capteur détectant un diamètre prédéterminé de la balle en formation. Le microprocesseur est capable d'émettre des signaux de commande pour l'entraînement discontinu pendant le liage du moteur électrique commandant le mouvement de va-et-vient du bras. Le microprocesseur est programmé de façon que ledit mouvement comporte un nombre déterminé d'arrêts où le bras est maintenu en position fixe pendant une durée déterminée, l'opération de liage continuant durant ces arrêts, le nombre d'arrêts et leur durée étant calculés par le microprocesseur en fonction dudit diamètre prédéterminé de la balle et du nombre de tours de lien désiré et affiché par l'opérateur à partir des signaux émis par le premier capteur et le deuxième capteur. La presse à fourrage peut avantageusement comprendre en outre un troisième capteur pour détecter la tension du lien au début de l'opération de liage. De préférence, la presse à fourrage comprend en outre une porte pouvant être ouverte et fermée par un vérin à double effet et verrouillée en position fermée, l'ouverture de la porte provoquant l'éjection d'une balle liée.

Dans ce cas, le dispositif de commande comprend en outre un quatrième capteur coopérant avec un dispositif de coupe du lien et détectant en fin d'opération de liage si le lien est coupé. Le microprocesseur reçoit le signal issu de ce quatrième capteur et est capable de provoquer l'éjection de la balle par ouverture de la porte lorsque les signaux émis par le premier et le quatrième capteurs indiquent que la rotation de la balle est arrêtée et que le lien est coupé. Le microprocesseur provoque ensuite la fermeture de la porte.

Dans un autre mode de réalisation de l'invention, le dispositif de commande automatique de liage de balles cylindriques de grand diamètre est adapté à une presse à fourrage du type précédemment mentionné et comportant une porte pouvant être ouverte et fermée par un vérin à double effet et verrouillée en position fermée, l'ouverture de la porte provoquant l'éjection d'une balle liée. Le dispositif de commande comprend un microprocesseur capable, dans une première phase, de mémoriser les durées d'actionnement dudit moteur dans l'un et l'autre sens et les durées d'arrêt telles qu'elles sont commandées manuellement par un opérateur, et dans une deuxième phase, de commander pendant chaque opération de liage, le mouvement de va-et-vient du bras en actionnant le moteur selon un cycle de fonctionnement reproduisant le cycle mémorisé de la première phase. Le dispositif de commande comprend en outre un premier capteur détectant la vitesse des moyens d'entraînement de la balle en rotation, et un quatrième capteur coopérant avec un dispositif de coupe du lien et détectant en fin d'opération de liage si le lien est coupé. Le microprocesseur reçoit les signaux issus de ces premier et quatrième capteurs et est capable de provoquer l'éjection de la balle par ouverture de la porte lorsque les signaux émis par les premier et quatrième capteurs indiquent que la rotation de la balle est arrêtée et que le lien est coupé. Le microprocesseur provoque ensuite la fermeture de la porte. Un deuxième capteur détectant un diamètre prédéterminé de la balle en formation peut en outre être prévu, ainsi qu'un troisième capteur pour détecter la tension du lien au début de l'opération de liage. De préférence, la presse à fourrage comprend une rampe de déchargement des balles éjectées. Dans ce cas, le dispositif comprend un cinquième capteur associé à la rampe de déchargement afin de détecter l'éjection d'une balle et relié au microprocesseur. Dans un mode de réalisation avantageux, il est en outre prévu un sixième capteur pour détecter la vitesse de déplacement de la presse et relié au microprocesseur afin de ne permettre les opérations de liage et d'éjection qu'à l'arrêt.

L'invention sera mieux comprise à l'étude de quelques modes de réalisation décrits à titre d'exemple nullement limitatifs et illustrés par les dessins annexés, sur lesquels:

la fig. 1 représente très schématiquement une vue de côté en coupe d'une presse à fourrage montrant les principaux organes ainsi que la disposition des capteurs utilisés dans la présente invention;

la fig. 2 est une vue schématique de dessous de la presse de la fig. 1 montrant la disposition et la structure du bras de guidage du lien;

la fig. 3 illustre la disposition du pupitre de commande à partir duquel l'opérateur peut agir sur le dispositif de l'invention;

la fig. 4 est un schéma électronique schématique d'une alimentation en courant électrique du dispositif de l'invention;

la fig. 5 illustre un premier mode de réalisation des principaux éléments d'un circuit électronique selon l'invention;

la fig. 6 illustre un deuxième mode de réalisation d'un circuit électronique selon l'invention; et

les fig. 7a et 7b illustrent l'organigramme d'une succession d'étapes lors du fonctionnement du dispositif de l'invention.

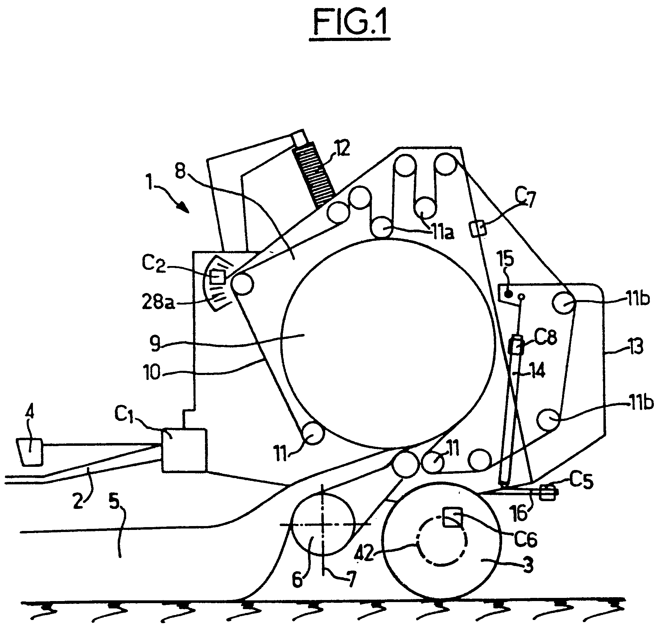

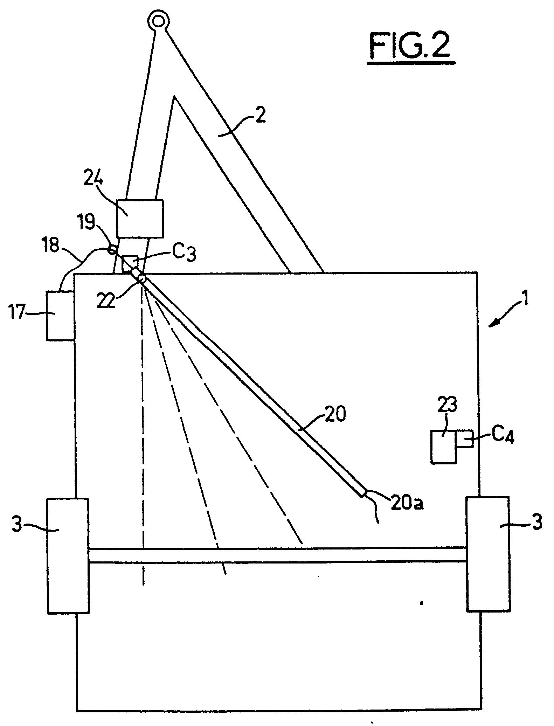

Telle qu'elle est illustrée sur les fig. 1 et 2, la presse à fourrage référencée 1 dans son ensemble est reliée par un attelage 2 à un tracteur non représenté sur les figures et peut se déplacer par l'intermédiaire des deux roues 3. L'entraînement des différents organes de la presse 1 se fait par liaison avec la prise de force 4 du tracteur.

L'andain 5 destiné à former une balle de fourrage est repris à partir du sol par le dispositif rotatif ramasseur 6 muni de picots périphériques 7. L'andain est ainsi amené jusqu'à l'intérieur d'une chambre de formation 8 pour la balle de fourrage 9. Cette formation se fait de manière connue en soi par enroulement sur lui-même de l'andain 5 à l'intérieur de la chambre 8, la mise en rotation de la balle en formation 9 étant assurée par plusieurs boucles de courroies 10 qui viennent entourer la balle en formation 9 sur une partie importante de sa périphérie et qui sont tendues sur plusieurs rouleaux 11 dont certains tels que 11a présentent un axe mobile qui permet leur déplacement à l'intérieur de la chambre 8 au fur et à mesure de l'augmentation du diamètre de la balle en formation 9. De cette manière, la boucle des courroies 10 voit sa longueur augmenter au fur et à mesure de l'augmentation du diamètre de la balle 9, la diminution correspondante de longueur des courroies étant absorbée par le déplacement des rouleaux 11a. La densité de la balle 9 est déterminée par l'action de ressorts de compression 12.

A l'arrière de la presse 1 se trouve une porte 13 qui peut être ouverte par l'action d'un ou plusieurs vérins hydrauliques 14, l'ensemble de la porte 13 pivotant autour de l'axe 15 ce qui permet l'éjection de la balle 9 qui est facilitée par le fait que certains rouleaux 11b sur lesquels passent les courroies 10 sont montés à l'intérieur même de la porte 13. Lors du déchargement de la balle 9, celle-ci roule sur des rampes de déchargement 16 qui facilitent sa chute sur le sol.

Le liage des balles 9 est réalisé au moyen d'une ficelle issue d'un réservoir 17. La ficelle 18 passe par un œil de guidage 19 puis à l'intérieur d'un bras de guidage tubulaire 20 monté sous le châssis de la machine. Le bras de guidage 20 peut être animé d'un mouvement de rotation autour d'un axe 22 de sorte que son extrémité 20a subit un mouvement de va-et-vient sur toute la largeur de la presse. Un dispositif de coupe 23 est placé sur l'un des côtés de la presse à l'opposé de l'axe 22, au voisinage de l'extrémité du bras 20. Le mouvement du bras de guidage 20 est commandé par un moteur ou vérin électrique 24.

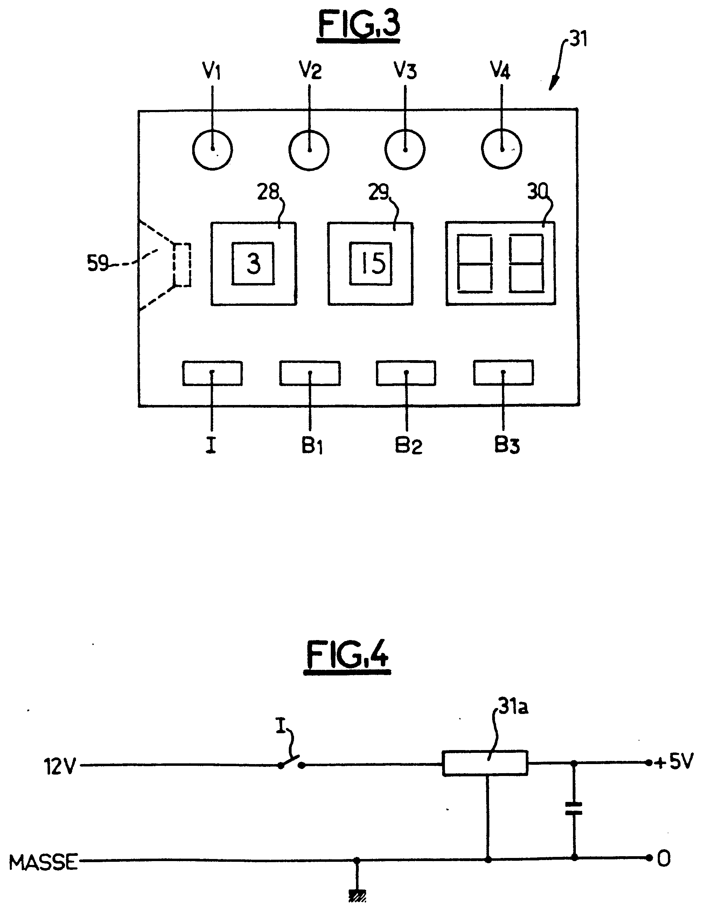

En se reportant maintenant en outre aux fig. 3 à 5, on voit que le dispositif de commande automatique de liage selon l'invention comprend un microprocesseur 25 muni d'un certain nombre de connexions d'entrée/sortie et relié par un connecteur bus 26 multivoies permettant à la fois la lecture et l'écriture par l'intermédiaire d'une mémoire tampon bidirectionnelle à trois états 27 d'une part avec deux dispositifs codeurs 28 et 29 et d'autre part avec un dispositif d'affichage 30 à deux chiffres. Les deux dispositifs codeurs 28 et 29 qui peuvent être par exemple deux roues codeuses ainsi que le dispositif d'affichage 30 se retrouvent sur le pupitre de commande 31 illustré sur la fig. 3. Le dispositif codeur 28 permet à l'opérateur de fixer le diamètre de la balle désirée tandis que le dispositif codeur 29 permet à l'opérateur de déterminer le nombre de tours de ficelle qu'il souhaite effectuer pour lier chaque balle. La roue codeuse du dispositif 29 peut par exemple comporter huit positions correspondant au nombre de tours de ficelle suivant: 6-9-12-15-18-21-25-30. La roue codeuse du dispositif 28 peut par exemple comporter neuf chiffres de 1 à 8. Le dispositif d'affichage 30 permet à l'opérateur de connaître le nombre de balles effectuées.

L'alimentation du circuit électronique se fait par l'intermédiaire de l'interrupteur I visible sur la fig. 4 et qui se retrouve sur le pupitre 31. Le circuit abaisseur de tension 31a fournit la tension de l'alimentation de 5 V à partir de la tension de 12 V issue de la batterie du tracteur et utilisée pour l'entraînement des organes mécaniques du dispositif (moteur 24 et commande du vérin 14).

Le dispositif de commande comprend huit capteurs référencés $C_1$ à $C_8$ dont les signaux de sortie sont tous introduits dans le microprocesseur 25.

Le premier capteur $C_1$ détermine la vitesse des moyens d'entraînement de la balle en formation. Ce capteur est avantageusement un capteur inductif placé en face d'une roue dentée reliée à la prise de force 4 et fournissant un certain nombre d'impulsions à chaque tour de cette roue dentée. Le capteur $C_1$ permet donc de déterminer la vitesse linéaire de déplacement des courroies 10 entourant la balle en formation 9.

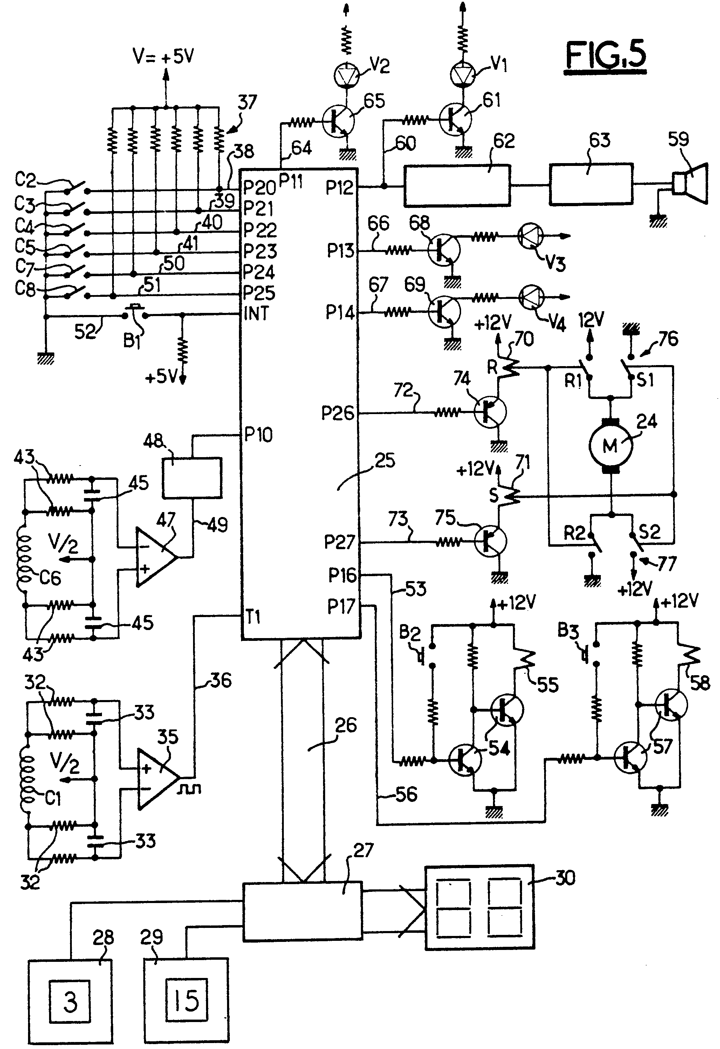

Comme on peut le voir sur la fig. 5, l'enroulement du capteur $C_1$ est relié par l'intermédiaire des parois de résistances 32 et des parois de condensateurs 33 aux deux entrées d'un amplificateur 35, l'ensemble constituant un dispositif intégrateur assurant en outre un filtrage convenable. A la sortie de l'amplificateur 35 relié par la connexion 36 à l'entrée d'horloge $T_1$ du microprocesseur 25 apparaissent des impulsions carrées régulières dont le comptage permet de déduire le nombre de tours que fait la balle pendant l'opération de liage.

Le deuxième capteur $C_2$ permet de détecter un diamètre prédéterminé de la balle en formation 9. Ce capteur peut être constitué par un contacteur à tige schématisé sur la fig. 5 sous la forme d'un interrupteur monté par l'intermédiaire d'une des résistances 37 et relié par la connexion 38 à l'une des entrées du microprocesseur 25.

Le troisième capteur $C_3$ est lié à l'une des extrémités du bras de guidage 20 au voisinage de l'œil de guidage 19 et permet de détecter la tension de la ficelle au début de l'opération de liage. Ce capteur est également analogue à un interrupteur tel que schématisé sur la fig. 5 et relié par la connexion 39 au microprocesseur 25.

Le quatrième capteur $C_4$ est associé au dispositif de coupe 23 et comprend par exemple un contacteur à galet analogue à un interrupteur relié par la connexion 40 au microprocesseur 25.

Le cinquième capteur $C_5$ est un contacteur à tige associé aux rampes de déchargement 16 afin de fournir un signal correspondant à l'éjection d'une balle. Il est relié au microprocesseur 25 par la connexion 41.

Le sixième capteur $C_6$ est un capteur du type inductif fournissant des impulsions à chaque passage d'une couronne dentée 42 liée à l'une des roues 3 de la presse 1. Le capteur $C_6$ fournit donc un certain nombre d'impulsions à chaque tour de la roue 3. L'enroulement du capteur $C_6$ est connecté comme celui du capteur $C_1$ par l'intermédiaire d'un montage de résistances 43 et de condensateurs 45 aux deux entrées d'un amplificateur 47 dont la sortie est reliée à une bascule monostable 48 elle-même reliée par la connexion 49 à l'une des entrées du microprocesseur 25. L'information provenant du capteur $C_6$ valide la bascule monostable 48 de sorte que si la presse 1 est en mouvement, c'est-à-dire si la roue 3 tourne, un signal haut est émis par le monostable 48 sur la sortie 49 de façon à bloquer le fonctionnement du microprocesseur 25. Ce résultat est obtenu en choisissant une constante de temps pour la bascule monostable 48 convenablement supérieure à l'intervalle de temps séparant deux impulsions issues du capteur $C_6$ et transmises par l'amplificateur 47. Dans ces conditions, dès que la presse 1 est à l'arrêt, la bascule monostable 48 retombe à son niveau bas et le microprocesseur 25 peut continuer à effectuer le programme en cours d'exécution.

Les septième et huitième capteurs $C_7$ et $C_8$ sont associés à la porte 13 de la porte 1 afin de contrôler sa position. Le capteur $C_7$ est un contacteur à galet qui fournit un signal lorsque la porte 13 est ouverte.

Le capteur $C_8$ est de préférence un contact de proximité à commande magnétique par interrupteur reed (ILS) du type normalement fermé, fixé sur la tige du vérin hydraulique 14 actionnant la porte 13. Les capteurs $C_7$ et $C_8$ schématisés sous la forme d'interrupteurs sur la fig. 5 sont reliés à deux entrées du microprocesseur 25 par les connexions 50 et 51.

L'opérateur dispose encore sur le pupitre de commande 31 de trois boutons à actionnement manuel $B_1$, $B_2$ et $B_3$ que l'on retrouve également sur le schéma électronique de la fig. 5.

Une action sur le bouton $B_1$ relié par la connexion 52 à l'une des entrées du microprocesseur 25 permet d'effectuer une opération de liage à tout moment, dans la mesure où la presse 1 est à l'arrêt.

Le bouton poussoir $B_2$ provoque l'ouverture de la porte 13. A cet effet, l'interrupteur correspondant visible sur la fig. 5 est connecté à l'une des sorties du microprocesseur 25 par la connexion 53 et relié par un montage amplificateur de deux transistors 54 à l'enroulement 55 d'un distributeur électrohydraulique capable d'actionner le vérin 14.

Le bouton-poussoir $B_3$ permet quant à lui de fermer la porte 13. Comme on peut le voir sur la fig. 5, il est relié par la connexion 56 à l'une des sorties du microprocesseur 25 et monté de la même manière que le bouton poussoir $B_2$ par l'intermédiaire de deux transistors 57 amplifiant le signal et commandant l'enroulement 58 de l'électrodistributeur précité de façon à provoquer un mouvement inverse du vérin 14.

Le pupitre de commande 31 comporte encore quatre voyants $V_1$ à $V_4$ qui permettent de contrôler certaines étapes des opérations de fonctionnement ainsi qu'un avertisseur sonore 59, ces éléments se retrouvant également sur le schéma de la fig. 5.

Le voyant $V_1$ est relié par la connexion 60 à l'une des sorties du microprocesseur 25 par l'intermédiaire d'un transistor 61. L'avertisseur sonore 59 est relié à la même sortie du microprocesseur 25 par l'intermédiaire d'un oscillateur 62 et d'un amplificateur 63.

Le montage est tel qu'un signal intermittent, visuel sur le voyant $V_1$ et sonore pour l'avertisseur 59 est émis lorsque le diamètre désiré de la balle en formation 9 est atteint ce qui est détecté par le capteur $C_2$. Au contraire, un signal continu, visuel sur le voyant $V_1$ et sonore pour l'avertisseur 59 est émis lorsque l'opération de liage est terminée ce qui est détecté par le capteur $C_4$ après découpe de la ficelle de liage 18.

Le voyant $V_2$ est relié par la connexion 64 à l'une des sorties du microprocesseur 25 par l'intermédiaire d'un transistor 65 de façon à émettre un signal lumineux lorsque le dispositif détecte un défaut dans la tension de la ficelle 18 avant le début proprement dit d'une opération de liage tel que détecté par le capteur $C_3$.

Les voyants $V_3$ et $V_4$ sont reliés chacun à une sortie 66, 67 du microprocesseur 25 par l'intermédiaire de transistors 68, 69. Le voyant $V_3$ est allumé lorsque la porte 13 n'est pas fermée tandis que le voyant $V_4$ est pendant toute la durée des opérations de liage et d'éjection de la balle.

Le moteur 24 permettant l'entraînement du bras de guidage 20 peut être entraîné dans un sens ou dans l'autre par deux relais 70, 71 reliés respectivement par les connexions 72 et 73 à deux sorties du microprocesseur 25 par l'intermédiaire de deux transistors 74, 75. Chaque relais 70, 71 commande un interrupteur double 76, 77 chacun desquels provoquant la rotation du moteur 24 dans un sens lorsqu'il est fermé. Il est ainsi possible de provoquer la rotation du moteur 24 dans les deux sens ainsi que son arrêt lorsque les interrupteurs 76, 77 sont ouverts tel que représenté sur la fig. 5.

Le dispositif de commande de l'invention tel qu'il est illustré sur les fig. 1 à 5 fonctionne de la manière suivante.

Avant de commencer les opérations de ramassage du fourrage, l'opérateur règle de façon mécanique sur la presse le diamètre des balles 9 qu'il souhaite réaliser en déplaçant un curseur sur un secteur gradué 28a visible sur la fig. 1. Il fixe ensuite sur son pupitre de commande 31 le nombre de tours de ficelle qu'il souhaite effectuer pour lier chaque balle 9 en agissant sur la roue codeuse du dispositif de codage 29. Sur la deuxième roue codeuse 28, l'opérateur reporte l'indication du secteur gradué correspondant au diamètre désiré des balles. Le travail peut alors commencer. La presse 1 entraînée par son tracteur et reliée par la prise de force 4 réalise une balle de fourrage 9 par le procédé classique d'enroulement de l'andain à l'intérieur de la chambre de formation de balle 8.

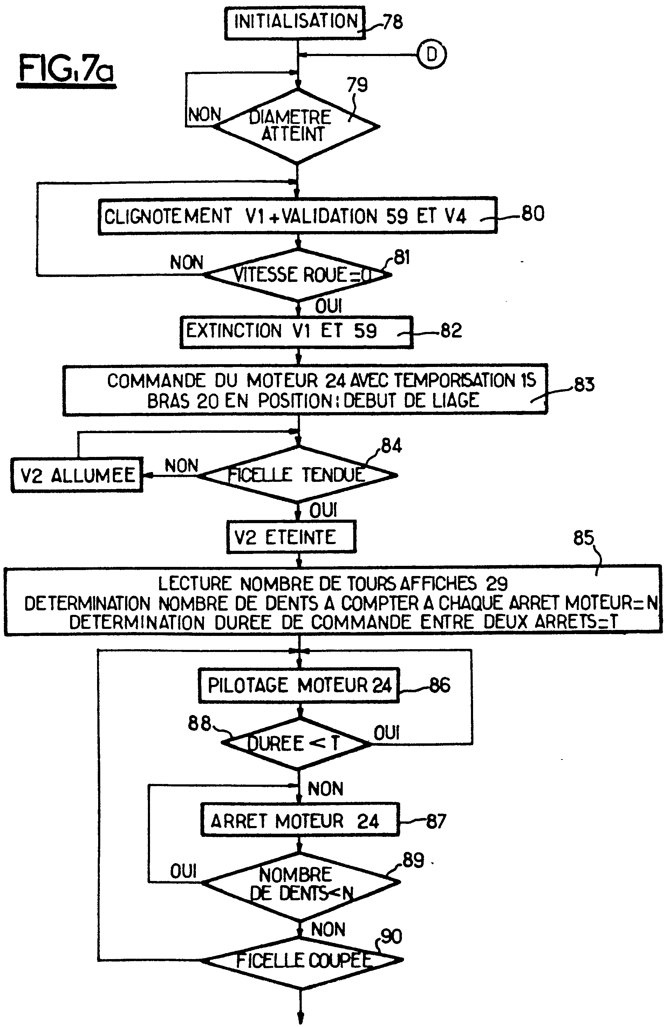

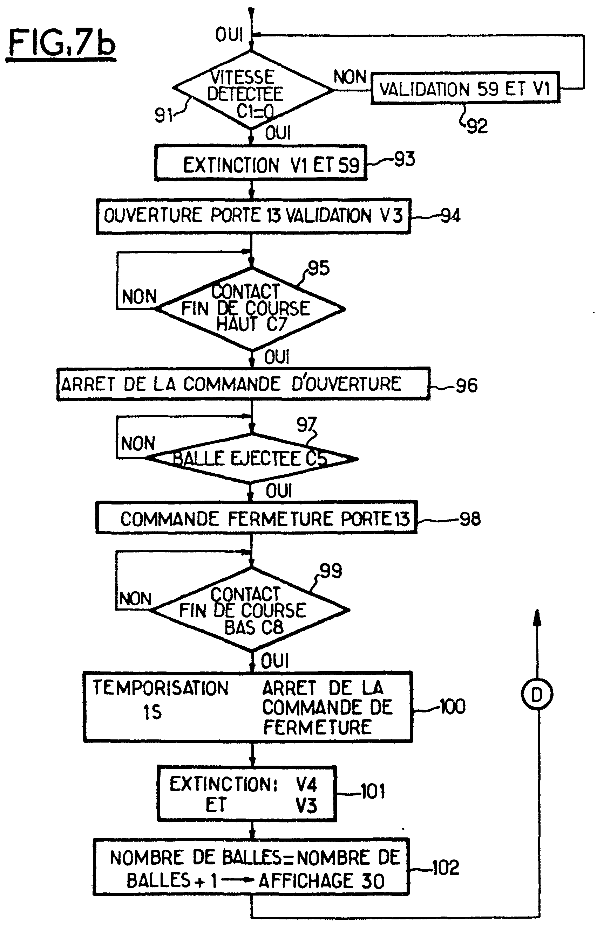

L'automatisation du liage et de l'éjection par le dispositif de l'invention se fait ensuite en suivant les différentes étapes de l'organigramme illustré sur les fig. 7a et 7b.

L'opérateur est averti du diamètre atteint par la balle en formation 9, tel que détecté par le capteur $C_2$, par le signal sonore intermittent de l'avertisseur 59 et le voyant clignotant $V_1$. Après initialisation du microprocesseur 25 et de ses connexions d'entrée/sortie par l'opérateur 78, on teste en 79 si le diamètre de la balle est atteint et si oui le voyant $V_1$ ainsi que l'avertisseur 59 sont mis en marche de façon intermittente tandis que le voyant $V_4$ indique à l'opérateur qu'une séquence de fonctionnement peut commencer (instruction 80). Le système teste alors en 81 si la presse est bien en position arrêtée selon les indications du capteur $C_6$. L'arrêt du tracteur et de la presse provoquent par l'instruction 82 l'interruption du signal sonore sur l'avertisseur 59 et l'extinction du voyant $V_1$. L'opération de liage proprement dite peut commencer par l'instruction 83. Le système teste d'abord en 84 que la tension de la ficelle, telle que détectée par le capteur $C_3$, est convenable provoquant dans le cas contraire un signal d'alarme lumineux par le voyant $V_2$.

Le microprocesseur 25, connaissant le nombre de tours de ficelle exigé, affiché par le dispositif de codage 29 ainsi que le diamètre de la balle à lier, affiché par le dispositif de codage 28, peut provoquer un entraînement discontinu du moteur électrique 24 de façon que le bras de guidage 20 se déplace selon un mouvement de va-et-vient depuis l'un des côtés latéraux de la presse jusqu'à l'autre côté puis revient à sa position initiale, ces deux mouvements étant interrompus par plusieurs arrêts représentés schématiquement sur la fig. 2 en traits interrompus.

Le microprocesseur 25 est programmé afin de calculer le nombre d'arrêts qu'il est nécessaire d'imposer dans le mouvement du bras de guidage 20 à la fois pour l'aller d'une extrémité à l'autre de la balle et pour le retour ainsi que la durée de chacun de ces arrêts. En effet pendant chaque arrêt la balle continue à être entraînée en rotation et le microprocesseur peut donc calculer le nombre de tours de ficelle effectués à chaque arrêt en fonction de sa durée. Dans ces conditions, le microprocesseur connaissant le nombre de tours de ficelle exigé ainsi que le diamètre de la balle à lier détermine le nombre des arrêts ainsi que leur durée pour l'obtention du nombre de tours de ficelle désiré.

Cette opération est schématisée par l'instruction 85 de la fig. 7a qui détermine la durée de chaque arrêt par le nombre de dents N que doit compter le capteur $C_1$ à chaque arrêt du moteur 24 ainsi que la durée devant s'écouler entre chaque arrêt T. Le moteur est commandé par les instructions 86, 87, les tests sur la durée T et le nombre N étant effectués en 88 et 89. A la fin de l'opération, le système teste en 90 si la ficelle est coupée ce qui se produit dès que le bras de guidage 20 arrive en butée et est détecté par le capteur $C_4$. L'information provenant du capteur $C_4$ liée au dispositif de coupe 23 permet au microprocesseur 25 de passer à l'opération d'éjection des balles. Toutefois, cette phase ne peut avoir lieu que si la rotation de la balle est arrêtée ce qui est testé en 91 une alarme étant émise par l'instruction 92 si l'opérateur n'a pas coupé la prise de force 4. Dès que la vitesse détectée par le capteur $C_1$ est nulle, l'alarme est arrêtée en 93 et le microprocesseur commande automatiquement l'ouverture de la porte 13 par l'instruction 94 jusqu'au contact de fin de course détecté par le capteur $C_7$ et testé en 95 le mouvement de la porte étant arrêté par l'instruction 96. Le système contrôle en 97 par le capteur $C_5$ l'éjection de la balle et provoque ensuite en 98 la fermeture de la porte 13 détectée par le capteur $C_8$ en 99. Les deux côtés de la porte 13 ne se verrouillant pas simultanément, il est préférable de prévoir une temporisation par l'instruction 100, d'une seconde environ, avant de couper la commande de l'électrodistributeur du vérin 14. L'extinction des voyants $V_3$ et $V_4$ par l'instruction 101 permet à l'opérateur de vérifier la bonne fermeture de la porte 13. Enfin, le nombre de balles réalisées est incrémenté par l'opération 102 et affiché sur le dispositif d'affichage 30.

Une action prioritaire sur le bouton $B_1$ provoque une interruption sur le microprocesseur 25 qui commence alors une séquence de liage après le test du diamètre atteint en 79.

Une action sur l'un des boutons $B_2$ ou $B_3$ permet d'ouvrir ou de fermer la porte arrière 13, la prise de force 4 étant arrêtée.

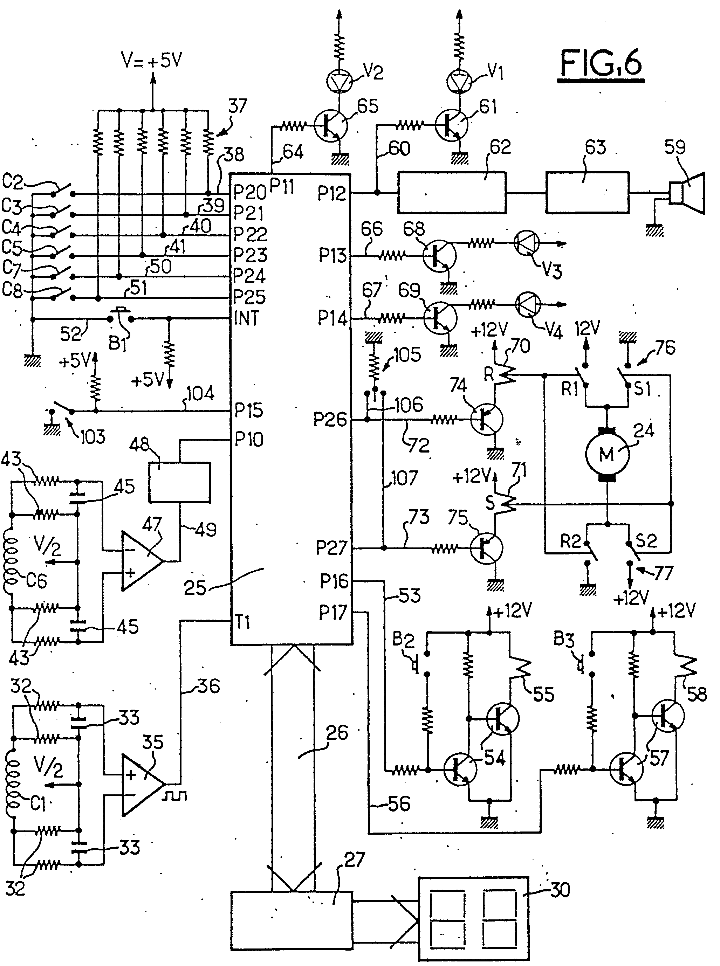

Dans un deuxième mode de réalisation illustré sur la fig. 6, le rôle du microprocesseur 25 est légèrement différent. Dans ce mode de réalisation, les deux roues codeuses 28 et 29 sont supprimées. Un interrupteur 103 est relié par la connexion 104 à l'une des entrées du microprocesseur 25. Un commutateur à bascule 105 est monté par les connexions 106 et 107 entre les connexions 72 et 73 qui relient le microprocesseur 25 aux deux relais 70 et 71 de façon à permettre une commande manuelle de rotation du moteur 24 dans un sens ou dans l'autre. Les deux interrupteurs 103 et 105 sont implantés sur le pupitre de commande de l'opérateur.

Le système ainsi modifié fonctionne alors de la manière suivante. Dans une première phase l'interrupteur 103 est placé en position ouverte. Lorsque les conditions de début de liage sont remplies et pour la première balle formée, le microprocesseur 25 considère alors les connexions 72 et 73 comme des entrées. Le microprocesseur 25 mémorise des temps correspondant à la durée de chaque état (moteur 24 à l'arrêt, déplacement vers la gauche du bras de guidage 20, déplacement vers la droite du bras de guidage 20). Au cours de cette phase préliminaire ou phase d'apprentissage, l'opérateur commande donc le bras de guidage 20 en agissant dans un sens ou dans l'autre sur le commutateur 105 provoquant ainsi un certain nombre d'arrêts et à chaque arrêt un certain nombre de tours de ficelle au cours du mouvement d'aller et de retour du bras.

Pour les opérations de liage des balles suivantes, l'opérateur ferme l'interrupteur 103 ce qui correspond à la deuxième phase ou phase automatique et n'agit plus sur le commutateur 105. Dans cette position, les connexions 72 et 73 sont considérées par le microprocesseur 25 comme des sorties. Le microprocesseur 25 est alors capable, en suivant une succession d'instructions analogues à celles illustrées sur les fig. 7a et 7b de répéter la séquence de liage mémorisée au cours de la phase d'apprentissage préliminaire.

**Revendications**

1. Dispositif de commande automatique de liage de balles cylindriques de grand diamètre produites par une presse à fourrage comportant un bras de guidage (20) du lien dont l'extrémité peut être animée d'un mouvement de va-et-vient sur toute la largeur de la balle en formation sous l'action d'un moteur électrique (24), la presse comportant en outre des moyens pour entraîner la balle en rotation, le dispositif de commande comprenant un premier capteur ($C_1$) de la vitesse d'entraînement desdits moyens, et comprenant un microprocesseur (25) recevant les signaux d'entrée émis par le premier capteur ($C_1$) précité et par un deuxième capteur ($C_2$) détectant un diamètre prédéterminé de la balle en formation, le microprocesseur étant capable d'émettre des signaux de commande pour l'entraînement discontinu pendant le liage du moteur électrique (24) commandant le mouvement de va-et-vient du bras (20), et étant programmé de façon que ledit mouvement comporte un nombre déterminé d'arrêts où le bras (20) est maintenu en position fixe pendant une durée déterminée, l'opération de liage continuant durant ces arrêts, le nombre d'arrêts et leur durée étant calculés par le microprocesseur (25) en fonction dudit diamètre prédéterminé de la balle et du nombre de tours de lien désiré et affiché par l'opérateur à partir des signaux émis par le premier capteur ($C_1$) et le deuxième capteur ($C_2$).

2. Dispositif automatique selon la revendication 1, caractérisé par le fait que la presse comprend en outre un troisième capteur ($C_3$) pour détecter la tension du lien au début de l'opération de liage.

3. Dispositif selon les revendications 1 ou 2, pour une presse à fourrage comprenant en outre une porte (13) pouvant être ouverte et fermée par un vérin (14) à double effet et verrouillée en position fermée, l'ouverture de la porte (13) provoquant l'éjection d'une balle liée, caractérisé par le fait que le dispositif de commande comprend en outre un quatrième capteur ($C_4$) coopérant avec un dispositif de coupe (23) du lien et détectant en fin d'opération de liage si le lien est coupé, le microprocesseur (25) recevant le signal issu de ce quatrième capteur ($C_4$) et étant capable de provoquer l'éjection de la balle par ouverture de la porte (13) lorsque les signaux émis par le premier ($C_1$) et le quatrième capteur ($C_4$) indiquent que la rotation de la balle est arrêtée et que le lien est coupé, le microprocesseur provoquant ensuite la fermeture de la porte (13).

4. Dispositif de commande automatique de liage de balles cylindriques de grand diamètre produites par une presse à fourrage comportant un bras de guidage du lien (20) dont l'extrémité peut être animée d'un mouvement de va-et-vient sur toute la largeur de la balle en formation sous l'action d'un moteur électrique (24), la presse comportant des moyens pour entraîner la balle en rotation et une porte (13) pouvant être ouverte et fermée par un vérin (14) à double effet et verrouillée en position fermée, l'ouverture de la porte (13) provoquant l'éjection d'une balle liée, le dispositif de commande comprenant un microprocesseur (25) capable, dans une première phase, de mémoriser les durées d'actionnement dudit moteur dans l'un et l'autre sens et les durées d'arrêt telles qu'elles sont commandées manuellement par un opérateur, et dans une deuxième phase, de commander pendant chaque opération de liage le mouvement de va-et-vient du bras (20) en actionnant le moteur (24) selon un cycle de fonctionnement reproduisant le cycle mémorisé de la première phase, le dispositif de commande comprenant en outre un premier capteur ($C_1$) détectant la vitesse des moyens d'entraînement de la balle en rotation, et un quatrième capteur ($C_4$) coopérant avec un dispositif de coupe (23) du lien et détectant en fin d'opération de liage si le lien est coupé, le microprocesseur (25) recevant les signaux issus de ces premier et quatrième capteurs ($C_1$, $C_4$) et étant capable de provoquer l'éjection de la balle par ouverture de la porte (13) lorsque les signaux émis par les premier et quatrième capteurs ($C_1$, $C_4$) indiquent que la rotation de la balle est arrêtée et que le lien est coupé, le microprocesseur provoquant ensuite la fermeture de la porte (13).

5. Dispositif selon la revendication 4, caractérisé par le fait qu'il comprend en outre un deuxième capteur ($C_2$) détectant un diamètre prédéterminé de la balle en formation.

6. Dispositif selon les revendications 4 ou 5, caractérisé par le fait qu'il comprend en outre un troisième capteur ($C_3$) pour détecter la tension du lien au début de l'opération de liage.

7. Dispositif selon l'une des revendications 3 à 6, caractérisé par le fait que la presse à fourrage comprend une rampe de déchargement (16) des balles éjectées, le dispositif comprenant un cinquième capteur ($C_5$) associé à la rampe de déchargement (16) afin de détecter l'éjection d'une balle et relié au microprocesseur (25).

8. Dispositif selon l'une des revendications 3 à 7, caractérisé par le fait qu'il comprend un sixième capteur ($C_6$) pour détecter la vitesse de déplacement de la presse et relié au microprocesseur (25) afin de ne permettre les opérations de liage et d'éjection qu'à l'arrêt.

## Claims

1. Automatic control device for binding large diameter cylindrical bales produced by a fodder press comprising a guiding arm (20) for the tie, the end of which guiding arm can, under the action of an electric motor (24), be moved in a to-and-fro movement all across the width of the bale being formed, the press comprising moreover means for driving the bale in rotation; the control device comprising a first sensor ($C_1$) of the drive speed of the said means and comprising a microprocessor (25) receiving the input signals issued by the above-mentioned first sensor ($C_1$) and by a second sensor ($C_2$) detecting a predetermined diameter of the bale being formed; the microprocessor being capable of emitting control signals for the discontinuous drive, during binding, of the electric motor (24) controlling the to-and-fro movement of the arm (20), and being programmed so that the said movement comprises a determined number of stops where the arm (20) is maintained in a fixed position for a determined duration, the binding operation continuing during these stops, the number of stops and their duration being calculated by the microprocessor (25), according to the said predetermined diameter of the bale and to the number of tie turns desired and displayed by the operator, from signals emitted by the first sensor ($C_1$) and the second sensor ($C_2$).

2. Automatic device according to Claim 1, characterized by the fact that the press comprises moreover a third sensor ($C_3$) for detecting the tension of the tie at the start of the binding operation.

3. Device according to Claims 1 or 2, for a fodder press comprising moreover a door (13) which can be opened and closed by a double action jack (14) and can be locked in a closed position, the opening of the door (13) bringing about the ejection of a bound bale, characterized by the fact that the control device comprises moreover a fourth sensor ($C_4$) cooperating with a cutting device (23) for the tie and detecting at the end of the binding operation if the tie is cut, the microprocessor (25) receiving the signal derived from this fourth sensor ($C_4$) and being capable of bringing about the ejection of the bale by opening the door (13) when the signals emitted by the first ($C_1$) and the fourth sensor ($C_4$) indicate that the rotation of the bale has stopped and that the tie is cut, the microprocessor then bringing about the closure of the door (13).

4. Automatic control device for binding large diameter cylindrical bales produced by a fodder press comprising a tie guiding arm (20) whose end can, under the action of an electric motor (24), be driven in a to-and-fro movement all across the width of the bale being formed, the press comprising means to drive the bale in rotation, and a door (13) which can be opened and closed by a double action jack (14) and can be locked in a closed position, the opening of the door (13) bringing about the ejection of a bound bale; the control device comprising a microprocessor (25) capable, in a first phase, of memorising the durations of operation of the said motor in both directions and the duration of the stops such as they are controlled manually by an operator, and in a second phase capable of controlling during each binding operation the to-and-fro movement of the arm (20) by activating the motor (24) in accordance with an operating cycle reproducing the cycle memorised from the first phase, the control device comprising moreover a first sensor ($C_1$) detecting the speed of the means of driving the bale in rotation and a fourth sensor ($C_4$) cooperating with a cutting device (23) for the tie and detecting at the end of the binding operation if the tie is cut, the microprocessor (25) receiving the signals derived from these first and fourth sensors ($C_1$, $C_4$) and being capable of bringing about the ejection of the bale by opening of the door (13) when the signals emitted by the first and fourth sensors ($C_1$, $C_4$) indicate that the rotation of the bale has stopped and that the tie is cut, the microprocessor then bringing about the closure of the door (13).

5. Device according to Claim 4, characterized by the fact that it comprises moreover a second sensor ($C_2$) detecting a predetermined diameter of the bale being formed.

6. Device according to Claims 4 or 5, characterized by the fact that it comprises moreover a third sensor ($C_3$) for detecting the tension of the tie at the start of the binding operation.

7. Device according to one of the Claims 3 to 6, characterized by the fact that the fodder press comprises an unloading ramp (16) for ejected bales, the device comprising a fifth sensor ($C_5$) associated with the unloading ramp (16) in order to detect the ejection of a bale, and linked to the microprocessor (25).

8. Device according to one of Claims 3 to 7, characterized by the fact that it comprises a sixth sensor ($C_6$) to detect the speed of movement of the press and linked to the microprocessor (25) in order to only permit the binding and ejection operations whilst stopped.

**Patentansprüche**

1. Vorrichtung zum automatischen Steuern der Einrichtung zum Binden von in einer Futterpresse geformten Rundballen mit großem Durchmesser, die einen Führungsarm (20) für das Band umfaßt, dessen Ende mittels Antrieb durch einen Elektromotor (24) in einer Hin- und Herbewegung über die gesamte Breite des zu bildenden Ballens geführt werden kann, wobei die Presse ferner Mittel enthält, um den Ballen in Drehung zu versetzen, wobei die Steuervorrichtung einen ersten Fühler ($C_1$) zum Erfassen der Drehzahl der genannten Mittel und ferner einen Mikroprozessor (25) enthält, der die vom ersten Fühler ($C_1$) abgegebenen Eingangssignale und die von einem zweiten Fühler ($C_2$) zur Erfassung eines vorbestimmten Durchmessers des sich bildenden Ballens aufnimmt, wobei der Mikroprozessor Steuersignale zum diskontinuierlichen Antrieb des Elektromotors (24) während des Bindens abgeben kann, um die Hin- und Herbewegung des Arms (20) zu steuern, und der so programmiert ist, daß die genannte Bewegung eine vorbestimmte Anzahl Stops umfaßt, in denen der Arm (20) für eine bestimmte Zeit still gehalten wird, wobei der Bindevorgang während dieses Stops fortgesetzt wird, die Anzahl dieser Stops und ihre Dauer vom Mikroprozessor (25) als Funktion des genannten vorbestimmten Ballendurchmessers und der vom Bediener einzugebenden gewünschten Anzahl Umwicklungen mit dem Band und auf der Grundlage der vom ersten Fühler ($C_1$) und vom zweiten Fühler ($C_2$) abgegebenen Signale berechnet wird.

2. Automatische Vorrichtung gemäß Anspruch 1, dadurch gekennzeichnet, daß die Presse ferner einen dritten Fühler ($C_3$) enthält, um die Spannung des Bandes zu Beginn des Bindevorgangs zu erfassen.

3. Vorrichtung gemäß den Ansprüchen 1 oder 2 für eine Futterpresse, die ferner eine Klappe (13) enthält, die über einen doppeltwirkenden Stellantrieb (14) geöffnet und verschlossen und in geschlossener Stellung verriegelt werden kann, wobei das Öffnen der Klappe (13) den Austoß eines gebundenen Ballens bewirkt, dadurch gekennzeichnet, daß die Steuervorrichtung ferner einen vierten Fühler ($C_4$) enthält, der mit einer Schneidevorrichtung (23) für das Band zusammenwirkt und am Ende des Bindevorgangs erfaßt, ob das Band abgeschnitten ist, wobei der Mikroprozessor (25) das Ausgangssignal dieses vierten Fühlers ($C_4$) aufnimmt und den Ausstoß des Ballens durch Öffnen der Klappe (13) bewirkt, sobald die vom ersten ($C_1$) und vierten Fühler ($C_4$) ausgehenden Signale anzeigen, daß sich der Ballen nicht mehr dreht und das Band abgeschnitten ist, wonach der Mikroprozessor anschließend wieder das Schließen der Klappe (13) bewirkt.

4. Vorrichtung zum automatischen Steuern der Einrichtung zum Binden von in einer Futterpresse geformten Rundballen mit großem Durchmesser, die eine Führungsarm (20) für das Band umfaßt, dessen Ende mittels Antrieb durch einen Elektromotor (24) in einer Hin- und Herbewegung über die gesamte Breite des zu bildenden Ballens geführt werden kann, wobei die Presse ferner Mittel, um den Ballen in Drehung zu versetzen, und eine Klappe (13) enthält, die über einen doppeltwirkenden Stellantrieb (14) geöffnet und verschlossen und in geschlossener Stellung verriegelt werden kann, wobei das Öffnen der Klappe (13) den Ausstoß eines gebundenen Ballens bewirkt, wobei die Steuervorrichtung einen Mikroprozessor (25) enthält, der in einer ersten Phase die Betriebsdauer des genannten Motors in der einen und in der anderen Richtung sowie die Stopzeiten speichern kann, die von einem Bediener manuell eingegeben werden, und in einer zweiten Phase während der einzelnen Bindevorgänge die Hin- und Herbewegung des Arms (20) steuert, indem er den Motor (24) nach einem Betriebsablauf gemäß den in der ersten Phase abgespeicherten Daten steuert, wobei die Steuervorrichtung ferner einen ersten Fühler (C₁), der die Drehzahl der Antriebsmittel für den rotierenden Ballen erfaßt, und einen vierten Fühler (C₄) enthält, der mit einer Schneidevorrichtung (23) für das Band zusammenwirkt und am Ende des Bindevorgangs erfaßt, ob das Band abgeschnitten ist, wobei der Mikroprozessor (25) das Ausgangssignal dieses ersten und vierten Fühlers (C₁/C₄) aufnimmt und den Ausstoß des Ballens durch Öffnen der Klappe (13) bewirkt, sobald die vom ersten und vierten Fühler (C₁/C₄) ausgehenden Signale anzeigen, daß sich der Ballen nicht mehr dreht und das Band abgeschnitten ist, wonach der Mikroprozessor anschließend wieder das Schließen der Klappe (13) bewirkt.

5. Vorrichtung gemäß Anspruch 4, dadurch gekennzeichnet, daß sie ferner eine zweiten Fühler (C₂) enthält, der einen vorgegebenen Durchmesser des entstehenden Ballens erfaßt.

6. Vorrichtung gemäß den Ansprüchen 4 oder 5, dadurch gekennzeichnet, daß sie ferner einen dritten Fühler (C₃) enthält, der die Spannung des Bandes zu Beginn des Bindevorgangs erfaßt.

7. Vorrichtung gemäß einem beliebigen der Ansprüche 3 bis 6, dadurch gekennzeichnet, daß die Futterpresse eine Ausstoßrampe (16) für die ausgestoßenen Ballen enthält, wobei die Vorrichtung einen fünften Fühler (C₅) an dieser Entladerampe (16) zum Erfassen des Ausstoßens eines Ballens enthält, der mit dem Mikroprozessor (25) in Verbindung steht.

8. Vorrichtung gemäß einem beliebigen der Ansprüche 3 bis 7, dadurch gekennzeichnet, daß sie einen sechsten Fühler (C₆) enthält, der die Fortbewegungsgeschwindigkeit der Presse erfaßt und mit dem Mikroprozessor (25) in Verbindung steht, um das Binden und Ausstoßen der Ballen nur im Stillstand zuzulassen.

# FIG.1

## FIG.2

## FIG.3

## FIG.4

EP 0 117 817 B1

FIG.5

FIG.6

## FIG.7a

INITIALISATION — 78

D

NON → DIAMETRE ATTEINT — 79

CLIGNOTEMENT V1 + VALIDATION 59 ET V4 — 80

NON → VITESSE ROUE = 0 — 81

OUI

EXTINCTION V1 ET 59 — 82

COMMANDE DU MOTEUR 24 AVEC TEMPORISATION 1S
BRAS 20 EN POSITION : DEBUT DE LIAGE — 83

V2 ALLUMEE ← NON — FICELLE TENDUE — 84

OUI

V2 ETEINTE

LECTURE NOMBRE DE TOURS AFFICHES 29
DETERMINATION NOMBRE DE DENTS A COMPTER A CHAQUE ARRET MOTEUR = N
DETERMINATION DUREE DE COMMANDE ENTRE DEUX ARRETS = T — 85

PILOTAGE MOTEUR 24 — 86

88 — DUREE < T — OUI

NON

ARRET MOTEUR 24 — 87

OUI ← NOMBRE DE DENTS < N — 89

NON

FICELLE COUPEE — 90

21

# FIG.7b

```
                              OUI
                               │  ┌──────────────────────────┐
                          ╱────┴────╲                        │
                         ╱  VITESSE  ╲   NON   ┌──────────────────────┐
                         ╲  DETECTEE  ╱───────▶│ VALIDATION 59 ET V1  │──┘
                    91 ──╲   C1=0    ╱         └──────────────────────┘
                          ╲────┬────╱                  └─92
                              OUI│
                    ┌──────────────────────────┐
                    │   EXTINCTION V1 ET 59    │──93
                    └────────────┬─────────────┘
                    ┌──────────────────────────────────┐
                    │ OUVERTURE PORTE 13 VALIDATION V3 │──94
                    └────────────────┬─────────────────┘
              ┌──────────────────────┤        95
              │                 ╱─────┴─────╲
            NON│                ╱  CONTACT    ╲
              └───────────────◀╲ FIN DE COURSE╱
                                ╲  HAUT C7   ╱
                                 ╲─────┬─────╱
                                     OUI│
                    ┌──────────────────────────────────┐
                    │ ARRET DE LA COMMANDE D'OUVERTURE │──96
                    └────────────────┬─────────────────┘
              ┌──────────────────────┤      97
            NON│                ╱─────┴─────╲
              └───────────────◀╲BALLE EJECTEE C5╱
                                 ╲─────┬─────╱
                                     OUI│
                    ┌──────────────────────────────────┐
                    │  COMMANDE FERMETURE PORTE 13    │──98
                    └────────────────┬─────────────────┘
              ┌──────────────────────┤      99
              │                 ╱─────┴─────╲
            NON│                ╱  CONTACT    ╲
              └───────────────◀╲ FIN DE COURSE╱
                                ╲  BAS C8    ╱
                                 ╲─────┬─────╱
                                     OUI│
          ┌──────────────────────────────────────┐
          │ TEMPORISATION      ARRET DE LA       │
          │     1S           COMMANDE DE         │──100
          │                   FERMETURE          │
          └──────────────────┬───────────────────┘
                    ┌──────────────────────┐
                    │ EXTINCTION:   V4     │──101
                    │     ET        V3     │
                    └──────────┬───────────┘
          ┌──────────────────────────────────────┐
          │ NOMBRE DE BALLES=NOMBRE DE           │──102
          │ BALLES + 1 ──▶ AFFICHAGE 30          │
          └──────────────────┬───────────────────┘
```

(D)